# EUROPÄISCHE PATENTSCHRIFT

(11) **EP 1 068 090 B1**
(45) Veröffentlichungstag und Bekanntmachung des Hinweises auf die Patenterteilung: **08.01.2003**
(21) Anmeldenummer: 99915729.0
(22) Anmeldetag: 31.03.1999
(51) Int. Cl.: B60K 6/04, B60K 41/00, F02N 17/00, B60K 6/02

(54) **HYBRIDANTRIEBSSYSTEM FÜR EIN KRAFTFAHRZEUG, SOWIE VERFAHREN ZUM BETREIBEN DESSELBEN IN DER ANFAHRPHASE**
HYBRID PROPULSION FOR A MOTOR VEHICLE AND METHOD FOR OPERATING SAME IN THE STARTING PHASE
SYSTEME D'ENTRAINEMENT HYBRIDE POUR UN VEHICULE AUTOMOBILE AINSI QUE PROCEDE POUR L'EXPLOITATION DE CE SYSTEME EN PHASE DE DEMARRAGE

(30) Priorität: 31.03.1998 DE 19814402
(43) Veröffentlichungstag der Anmeldung: 17.01.2001
(73) Patentinhaber: Continental ISAD Electronic Systems GmbH & Co. oHG, 86899 Landsberg/Lech (DE)
(72) Erfinder: PELS, Thomas, D-77855 Achern (DE); REVERMANN, Klaus, D-26835 Schwerinsdorf (DE)
(74) Vertreter: Lippich, Wolfgang, Dipl.-Pys., Dr.rer.nat.
(86) Internationale Anmeldenummer: EP9902218
(87) Internationale Veröffentlichungsnummer: WO99050084

(56) Entgegenhaltungen:
- EP-A- 0 743 215
- EP-A- 0 819 561
- DE-A- 19 532 129
- DANIELS J: "TOYOTA REVEALS MORE" AUTOMOTIVE ENGINEER, Bd. 22, Nr. 5, 1. Juni 1997, Seite 54-64 XP000691165

## Beschreibung

Die Erfindung betrifft ein Antriebssystem für ein Kraftfahrzeug mit einem Verbrennungsmotor und wenigstens einer elektrischen Maschine, die jeweils für sich als Antriebsmotor des Fahrzeugs dienen können. Die Erfindung betrifft ferner ein Verfahren zum Betreiben eines solchen Antriebssystems. Solche Antriebssysteme, bei denen Verbrennungsmotor und elektrische Maschine jeweils für sich den Fahrzeugantrieb übernehmen können, sind auch unter der Bezeichnung "Parallelhybridantrieb" bekannt.

Ein wesentliches Ziel bei der Entwicklung von Kraftfahrzeugantrieben ist die Reduzierung der von den Verbrennungsmotoren verursachten Schadstoff- und Lärmemissionen. Ein kritischer Bereich ist hierbei die Anfahrphase der Fahrzeuge: hier kommt es zu einem erhöhten spezifischen Kraftstoffverbrauch und zu relativ hohen Schadstoffemissionen. Letzteres stört insbesondere im Stadtbereich aufgrund der dort gehäuften Anfahrvorgänge. Hinzu kommt eine erhöhte Lärmbelästigung aufgrund des Hochdrehens der Motoren vor dem Einkuppeln.

Parallelhybridantriebe bieten in diesem Zusammenhang die Möglichkeit, das Fahrzeug in der Anfahrphase ausschließlich mit Hilfe eines elektrischen Antriebes zu beschleunigen und den Verbrennungsmotor erst zuzuschalten, wenn der Betriebspunkt in einem hinsichtlich Wirkungsgrad und Schadstoffemissionen günstigeren Bereich liegt. Eine solche Lösung ist beispielsweise aus der DE 33 35 923 A1 bekannt. Hier wird nach dem elektrischen Anfahren der Verbrennungsmotor mit Hilfe einer Kupplung über die elektrische Maschine mit der Antriebsachse verbunden. Dieser wird dabei durch das Ankuppeln angeworfen. Eine entsprechende Lösung ist aus der EP 0 743 216 A2 bekannt. Das Ankuppeln des'Verbrennungsmotors an den Antriebsstrang erfolgt dort nicht mechanisch, sondern mit Hilfe einer elektromagnetischen Kupplung. Das Ankuppeln des stillstehenden Verbrennungsmotors an den rotierenden Antriebsstrang hat den Nachteil, daß schlagartig ein relativ großes Drehmoment aufgebracht werden muß. Dies kann zu einem ruckartigen Abfall des Antriebsmoments führen. Um diesen unerwünschten Effekt zu mindern, ist in der erstgenannten DE 33 35 923 A1 der Verbrennungsmotor mit einem abschaltbaren Schwungrad ausgebildet. Dadurch kann sein Trägheitsmoment verkleinert werden, so daß er beim Ankuppeln leichter "mitgerissen" werden kann. In der zweitgenannten EP 0 743 216 A2 wird dem ruckartigen Momentenabfall mit einer entsprechenden Erhöhung des elektrischen Antriebsmoments entgegengewirkt.

Daneben ist aus der gattungsgemäßen EP 0 819 561 A2 (TOYATA) ein Hybridantrieb mit einem Verbrennungsmotor und zwei elektrischen Maschinen bekannt, die untereinander und mit dem Triebstrang durch ein Planetengetriebe gekoppelt sind. Ein mit diesem Hybridantrieb ausgrüstetes Fahrzeug kann zunächst allein elektrisch mit Hilfe einer der beiden elektrischen Maschinen anfahren. Der Verbrennungsmotor wird bei bereits fahrenden Fahrzeug gestartet, indem die andere der beiden elektrischen Maschinen den stehenden Verbrennungsmotor an den drehenden Triebstrang koppelt. Ein entsprechender Antrieb ist aus der Druckschrift Daniels J., "Toyota reveals more", Automotive Engineer, Bd. 22, Nr. 5, 01.06.1997, S. 54 bis 64 bekannt. Hier ist angegeben, daß der Verbrennungsmotor nach dem elektrischen Anfahren erst nach Erreichen einer Fahrzeuggeschwindigkeit, welche der Leerlaufdrehzahl des Verbrennungsmotors äquivalent ist, gestartet wird.

Ferner ist es bei Hybridantrieben bekannt, beim Gangwechsel eine Synchronisierung vorzunehmen.

So ist aus der DE 195 30 231 A1 ein Hybridantrieb bekannt, bei dem der Elektromotor während des Gangwechsels abgekuppelt wird und anschließend zum Wiederankuppeln zumindest angenähert auf Synchronlauf relativ zur Antriebswelle gebracht wird. Das Ab- und Ankuppeln des Elektromotors dient dort einer vereinfachten Synchronisierungssteuerung des Wechselgetriebes. Dies steht aber nicht im Zusammenhang mit der Anfahrphase des Fahrzeugs.

Aus der DE 195 39 571 A1 ist außerdem ein Hybridantrieb bekannt, bei dem der Verbrennungsmotor und der Elektromotor mittels eines elektrodynamischen Wandlers gekoppelt sind. Mit Hilfe des Elektromotors erfolgt beim Gangwechsel eine Synchronisierung zur Überbrückung der Gangsprünge. Auch dies steht nicht im Zusammenhang mit der Anfahrphase des Fahrzeugs.

Der vorliegenden Erfindung liegt die Aufgabe zugrunde, ein weiteres Antriebssystem anzugeben, welches einen elektrischen Anfahrvorgang und ein späteres Umschalten auf Verbrennungsmotorantrieb ermöglicht. Dazu gehört auch die Bereitstellung eines entsprechenden Verfahrens.

Die Erfinder der vorliegenden Erfindung haben erkannt, daß es wünschenswert wäre, zur Beseitigung des o.g. Problems den Kupplungsruck im Ansatz zu beseitigen, und nicht nur seine Auswirkungen zu mindern. Sie haben erkannt, daß dies durch eine Synchronisation von Verbrennungsmotor und Antrieb erzielbar ist, und zwar indem der Verbrennungsmotor vom elektrischen Antrieb schon am Anfang der Anfahrphase mitgeschleppt wird. Er wird dann zum gewünschten Zeitpunkt einfach gestartet, z.B. durch Aktivierung von Kraftstoffzufuhr und/oder Zündung.

Im einzelnen stellt die Erfindung gemäß Anspruch 1 ein Antriebssystem für ein Kraftfahrzeug mit einem Verbrennungsmotor und einer elektrischen Maschine bereit, die jeweils für sich als Antriebsmotor des Fahrzeugs dienen können, wobei das Antriebssystem eine Steuerung aufweist, die so ausgebildet ist, daß die Anfahrphase des Fahrzeugs folgendermaßen abläuft:
i) das Fahrzeug wird anfangs allein durch die elektrische Maschine beschleunigt,
ii) der Verbrennungsmotor wird währenddessen gestartet,
iii) der Verbrennungsmotor übernimmt darauffolgend den Antrieb des Fahrzeugs,
dadurch gekennzeichnet, daß der Verbrennungsmotor und der elektrische Maschine derart miteinander gehoppelt sind, daß im Schritt i) der Verbrennungsmotor von Anfang der Anfahrphase an von der elektrischen Maschine mitgeschleppt wird, so daß beim Beschleunigen des Fahrzeugs aus dem Stand auch der Verbrennungsmotor beschleunigt wird.

Eine entsprechende verfahrensmäßige Lösung ist in Anspruch 10 angegeben.

Wie oben bereits ausgeführt wurde, vermeidet die Erfindung das Auftreten eines Startrucks bereits im Ansatz und macht daher aufwendige und nicht optimale Lösungen, etwa nach Art eines verstellbaren Trägheitsmoments hinfällig.

In den Unteransprüchen sind vorteilhafte Ausgestaltungen angegeben.

Gemäß Anspruch 2 ist es vorteilhaft, wenn die elektrische Maschine ohne Übersetzung auf der Kurbelwelle des Verbrennungsmotors oder einer Wellenfortsetzung der Kurbelwelle sitzt.

Vorzugsweise dient die elektrische Maschine als Generator, wenn das Fahrzeug durch den Verbrennungsmotor angetrieben wird (Anspruch 3). =

Beim Mitschleppen des Verbrennungsmotors entstehen störende Drehmomentschwankungen durch die alleinige Wirkung von Massenkräften des Kurbeltriebs. Gemäß Anspruch 4 wirkt eine mit dem Verbrennungsmotor gekoppelte elektrische Maschine diesen Drehmomentschwankungen aktiv entgegen, indem sie entgegengerichtete (gegenphasige) Drehmomente aufbringt. Gemäß Anspruch 4 handelt es sich bei dieser elektrischen Maschine um diejenige, welche auch als Antriebsmotor für das Fahrzeug fungiert. Zu diesem Zweck wird die Maschine so gesteuert, daß sie die entgegengerichteten, im allgemeinen zeitlich schnell variierenden Drehmomente dem (relativ dazu nur langsam variierenden) Antriebsmoment überlagert.

Zur Verminderung der vom Komprimieren herrührenden Drehmomentschwankungen erfolgt gemäß Anspruch 5 das Mitschleppen des Verbrennungsmotors zunächst im dekomprimierten Zustand. Um einen etwaigen Ruck beim Übergang vom Betrieb unter Dekompression zu demjenigen unter Kompression zu vermeiden, setzt gemäß Anspruch 5 die Kompression nach dem anfänglichen dekomprimierten Mitschleppen weich ein. Um eine besonders wirksame Dämpfung der Ungleichförmigkeiten zu erzielen, kann vorteilhaft die Dekompression kombiniert mit der obigen Aktivdämpfung durch die elektrische Maschine zur Anwendung kommen. Gemäß Anspruch 7 ist der Verbrennungsmotor zur Erzielung der Dekompressionsfunktion vorteilhaft mit einem elektromagnetischen oder elektrodynamischen Ventiltrieb ausgestattet (ein elektromagnetischer Ventiltrieb ist beispielsweise aus der DE 30 24 109 A1 bekannt). Die Dekompression und ggf. der weiche Übergang von Dekompression zu Kompression werden durch entsprechende Ansteuerung des Ventiltriebs bewirkt. Der hohe Bedarf an elektrischer Energie, den ein solcher Ventiltrieb hat, kann vorteilhaft gedeckt werden, indem die dem Antrieb dienende elektrische Maschine nach Beendigung der Anfahrphase als Generator fungiert.

Das eigentliche Starten des mitgeschleppten Verbrennungsmotors kann dadurch herbeigeführt werden, daß bei Erreichen einer ausreichenden Drehzahl die Zündung und/oder die Kraftstoffeinspritzung aktiviert werden (Anspruch 8).

Für alle genannten Ausgestaltungen der Erfindung ist es vorteilhaft, wenn die zum Starten und/oder Fahrzeugbeschleunigen dienende/n Maschine/n auf der Kurbelwelle des Verbrennungsmotors oder einer Antriebswelle sitzt und während des Antriebs durch den Verbrennungsmotor mitdreht.

Besonders vorteilhaft ist die Erfindung im Rahmen einer automatischen Start-Stop-Steuerung des Verbrennungsmotors einsetzbar (Anspruch 9). Bei einer solchen Start-Stop-Steuerung muß ein Fahrzeug nämlich sehr häufig aus einem Zustand mit abgestelltem Verbrennungsmotor beschleunigen. Die Charakteristika des erfindungsgemäßen Antriebssystems - absolut verzögerungsfreies Losfahren sowie geringe Lärm- und Schadstoffemissionen in der Anfahrphase - schlagen hierbei besonders vorteilhaft zu Buche.

Die obigen Ausführungen zum Antriebssystem haben vollinhaltlich auch Gültigkeit für das erfindungsgemäße Verfahren (Anspruch 10).

Die Erfindung wird nun anhand von Ausführungsbeispielen und der angefügten beispielhaften Zeichnung näher erläutert.

In der Zeichnung zeigen:
- Fig. 1: eine Schemadarstellung der wichtigsten Funktionseinheiten eines Ausführungsbeispiels;
- Fig. 2a, b: ein zum Ausführungsbeispiel gehöriges Diagramm der Drehzahl des Antriebs als Funktion der Zeit und ein zugehöriges Diagramm des Moments der elektrischen Maschine.

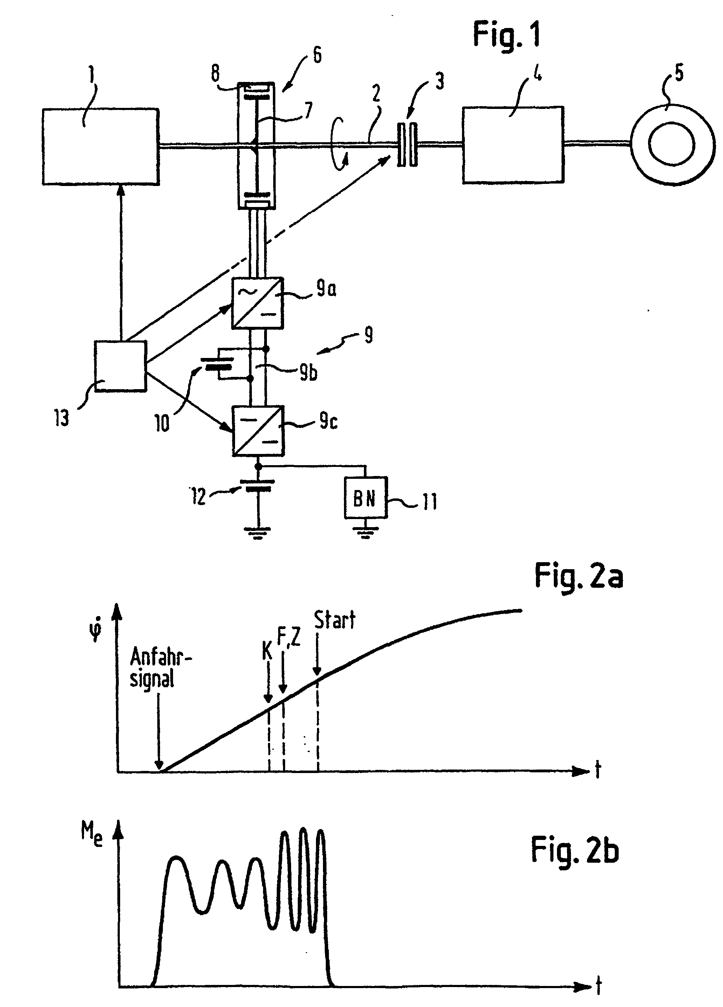

Ein Antriebssystem für ein Kraftfahrzeug, z.B. einen Personenkraftwagen, weist gemäß Fig. 1 einen Verbrennungsmotor 1 auf, der Drehmoment über eine Antriebswelle 2 (z.B. die Kurbelwelle des Verbrennungsmotors 1 und eine damit verbundene Wellenfortsetzung), eine Kupplung 3 und ein Getriebe 4 auf Antriebsräder 5 des Fahrzeugs abgibt. Auf der Antriebswelle 2 sitzt eine ebenfalls als Antriebsquelle dienende elektrische Maschine 6, hier eine Asynchron-Drehstrommaschine. Sie weist einen direkt auf der Antriebswelle 2 sitzenden und drehfest mit ihr verbundenen Läufer 7 sowie einen z.B. am Gehäuse des Verbrennungsmotors 1 gegen Drehung abgestützten Ständer 8 auf. Die elektrische Maschine 6 (sowie die unten näher beschriebenen Einrichtungen zu ihrer Speisung und zur Energiespeicherung) sind so dimensioniert, daß sie das Fahrzeug aus dem Stand beschleunigen kann und dabei den Verbrennungsmotor 1 mitschleppen kann, und zwar ohne Über- oder Untersetzung zwischen der elektrischen Maschine 6 und dem Verbrennungsmotor 1, so daß beide permanent mit gleicher Drehzahl zusammenlaufen können. Bei (nicht dargestellten) Ausführungsformen ist zwischen der Antriebswelle 5 und der elektrischen Maschine 6 ein Untersetzungsgetriebe angeordnet, z.B. in Form eines Planetengetriebes, so daß die elektrische Maschine 6 beispielsweise mit der doppelten Drehzahl des Verbrennungsmotors 1 dreht. Die (nicht dargestellte) Wicklung des Ständers 8 wird durch einen Wechselrichter 9 mit elektrischen Strömen und Spannungen praktisch frei einstellbarer Amplitude, Phase und Frequenz gespeist. Es handelt sich z.B. um einen Gleichspannungs-Zwischenkreis-Wechselrichter, welcher aus einer im wesentlichen konstanten Zwischenkreis-Gleichspannung mit Hilfe von elektronischen Schaltern z.B. sinusbewertete breitenmodulierte Pulse herausschneidet, die - gemittelt durch die Induktivität der elektrischen Maschine 6 - zu nahezu sinusförmigen Strömen der gewünschten Frequenz, Amplitude und Phase führen. Der Wechselrichter 9 besteht im wesentlichen aus einem Gleichstrom-Wechselstrom-Umrichter 9a, einem Zwischenkreis 9b und einem GleichspannungsWandler 9c. Ein Hochleistungsenergiespeicher 10 liegt - elektrisch gesehen - im Zwischenkreis 9b. Es handelt sich bei ihm z.B. um eine Kurzzeitbatterie oder einen Kondensatorspeicher mit hoher Kapazität. Der Wandler 9c ist mit einem Niederspannungs-Fahrzeugbordnetz 11 und einem Langzeitspeicher, hier einer herkömmlichen Niederspannungs-Bordnetzbatterie 12, gekoppelt. Das Bordnetz 11 und die Batterie 12 liegen auf einem niedrigen Spannungsniveau, z.B. 12 oder 24 Volt. Der Zwischenkreis 9b liegt demgegenüber auf einer erhöhten Spannung, z.B. an der oberen Grenze des Niederspannungsbereichs (z.B. 42 Volt) oder auch weit darüber, z.B. 200 bis 300 Volt. Die elektrische Maschine 6 kann nach dem (unten noch näher beschriebenen) Anfahrvorgang, bei dem sie elektrische Energie aus dem Hochleistungsspeicher 10 entnimmt, als Generator fungieren, d.h. elektrische Energie liefern. Diese dient der Aufladung des Hochleistungsspeichers 10, der Niederspannungsbatterie 12 sowie der Versorgung von Verbrauchern, beispielsweise Hochleistungsverbrauchern (z.B. elektromagnetischer Ventiltrieb) auf einem erhöhten Spannungsniveau (z.B. dem Zwischenkreisniveau) und normalen Verbrauchern im Niederspannungsnetz 11, und zwar nach Gleichrichtung durch den Umrichter 9a und ggf. Spannungsherabsetzung durch den Wandler 9c. Im Motorbetrieb wandelt der Umrichter 9a die von der Hochleistungsbatterie 10 in den Zwischenkreis 9b abgegebene Gleichspannung in Wechselspannung um. Ein übergeordnetes Steuergerät 13 steuert den Wechselrichter 9, und zwar den Umrichter 9a und den Wandler 9c. Es steuert ferner den Verbrennungsmotor 1 und die (automatisch betatigbare) Kupplung 3. Bei weiteren (nicht gezeigten) Ausführungsformen liegen Zwischenkreis und Fahrzeugbordnetz auf dem gleichen Spannungsniveau, z.B. an der oberen Grenze des Niederspannungsbereichs (z.B. 42 Volt).

Anhand Fig. 2 wird nun die Funktionsweise des Antriebssystems von Fig. 1 erläutert: Der Fahrer des Fahrzeugs gibt bei abgestelltem Verbrennungsmotor 1 ein Anfahrsignal, z.B. durch Betätigen des Fahrpedals. Das Fahrzeug fährt daraufhin praktisch verzögerungsfrei an und beschleunigt stetig. Der erste Teil des Anfahrvorgangs erfolgt durch den Antrieb der elektrischen Maschine 6 bis, für den Fahrer praktisch unmerklich, der Verbrennungsmotor 1 den weiteren Antrieb übernimmt. Dies ist im Drehzahldiagramm der Antriebswelle 2 gemäß Fig. 2a dargestellt.

Die elektrische Maschine 6 hat in der ersten Phase des Anfahrvorgangs eine Doppelfunktion. Und zwar dient sie einerseits der Fahrzeugbeschleunigung, andererseits dreht sie gleichzeitig den drehfest mit ihr verbundenen Verbrennungsmotor mit hoch, so daß dieser im Verlauf der Anfahrbeschleunigung gestartet werden kann. Im ersten Teil dieser Phase wird der Verbrennungsmotor 1 im dekomprimierten Zustand hochgedreht, wobei die Dekompression beispielsweise durch ein Offenhalten des Auslaßventils erfolgen kann. Ein derartiges Ventilverhalten kann einfach mit Hilfe einer elektromagnetischen Ventilsteuerung realisiert werden. Bei Erreichen einer ausreichenden Drehzahl wird die Dekompression beendet (gekennzeichnet mit "K" in Fig. 2a), wobei der Übergang von Dekompression zu Kompression vorzugsweise weich erfolgt. Kurz danach beginnt die Einspritzung des Kraftstoffes und die Aktivierung der Zündung (gekennzeichnet mit "F, Z" in Fig. 2a). Sodann startet der Verbrennungsmotor 1 und übernimmt die weitere Fahrzeugbeschleunigung (gekennzeichnet durch "Start"). Um diesen Losfahrvorgang zu ermöglichen, erzeugt die elektrische Maschine 6 ab dem Zeitpunkt des Anfahrsignals ein hohes Antriebs-Drehmoment, welches bei Übernahme des Fahrzeugantriebs durch den Verbrennungsmotor 1 wieder zurückgenommen wird. Diesem, im wesentlichen konstanten Drehmoment ist ein Wechseldrehmoment überlagert, das betragsgleich gegenphasig zu den Drehmomentschwankungen ist, welche der Verbrennungsmotor 1 beim Mitschleppen erzeugt. Wie in Fig. 2b dargestellt ist, nimmt dieses überlagerte Wechseldrehmoment nach Beendigung der Dekompression stark zu. Dann nehmen nämlich die Gaskräfte des mitgeschleppten Verbrennungsmotors 1 zu, so daß zu deren Kompensation ein entsprechend größeres Wechseldrehmoment erforderlich ist.

## Patentansprüche

1. Antriebssystem für ein Kraftfahrzeug, mit einem Verbrennungsmotor (1) und einer elektrischen Maschine (6), die jeweils für sich als Antriebsmotor des Fahrzeugs dienen können, wobei das Antriebssystem eine Steuerung aufweist, die so ausgebildet ist, daß die Anfahrphase des Fahrzeugs folgendermaßen abläuft:
i) das Fahrzeug wird anfangs allein durch die elektrische Maschine (6) beschleunigt,
ii) der Verbrennungsmotor (1) wird währenddessen gestartet,
iii) der Verbrennungsmotor (1) übernimmt darauffolgend den Antrieb des Fahrzeugs,
**dadurch gekennzeichnet, daß** der Verbrennungsmotor und die elektrische Maschine derart miteinander gehoppelt sind, daß im Schritt i) der Verbrennungsmotor (1) von Anfang der Anfahrphase an von der elektrischen Maschine (6) mitgeschleppt wird, so daß beim Beschleunigen des Fahrzeugs aus dem Stand auch der Verbrennungsmotor (1) beschleunigt wird.

2. Antriebssystem nach Anspruch 1, bei welchem die elektrische Maschine (6) ohne Übersetzung auf der Kurbelwelle des Verbrennungsmotors (1) oder einer Wellenfortsetzung der Kurbelwelle sitzt.

3. Antriebssystem nach Anspruch 1 oder 2, bei welchem die elektrische Maschine (6) als Generator dient, wenn das Fahrzeug durch den Verbrennungsmotor (1) angetrieben wird.

4. Antriebssystem nach einem der Ansprüche 1 bis 3, bei welchem beim Mitschleppen des Verbrennungsmotors (1) auftretende Drehmomentschwankungen aktiv durch entgegengerichtete Drehmomente verringert werden, welche von der elektrischen Maschine (6) aufgebracht und dabei dem antreibenden Moment überlagert werden.

5. Antriebssystem nach einem der Ansprüche 1 bis 4, bei welchem der Verbrennungsmotor (1) am Anfang des Mitschleppens dekomprimiert mitbeschleunigt wird.

6. Antriebssystem nach Anspruch 5, bei welchem die Kompression nach dem anfanglichen, dekomprimierten Mitschleppen weich einsetzt.

7. Antriebssystem nach Anspruch 5 oder 6, bei welchem der Verbrennungsmotor (1) mit einem elektromagnetischen oder elektrodynamischen Ventiltrieb ausgerüstet ist und die Dekompression durch geeignete Ansteuerung dieses Ventiltriebs erreicht wird.

8. Antriebssystem nach einem der Ansprüche 1 bis 7, bei welchem beim Mitschleppen des Verbrennungsmotors (1) die Kraftstoffzufuhr und/oder die gegebenenfalls vorhandene Zündung wenigstens so lange verzögert wird, bis eine zum Starten des Verbrennungsmotors (1) ausreichende Drehzahl erreicht wird.

9. Antriebssystem nach einem der Ansprüche 1 bis 8, welches mit einer automatischen Start-Stop-Steuerung des Verbrennungsmotors (1) ausgerüstet ist.

10. Verfahren zum Betreiben eines Antriebssystems für ein Kraftfahrzeug gemäß Anspruch 1, mit folgenden Schritten:
i) das Fahrzeug wird anfangs allein durch die elektrische Maschine (6) beschleunigt,
ii) der Verbrennungsmotor (1 wird währenddessen gestartet,
iii) der Verbrennungsmotor (1) übernimmt darauffolgend den Antrieb des Fahrzeugs,
**dadurch gekennzeichnet, daß** im Schritt i) der Verbrennungsmotor (1) von Anfang der Anfahrphase an von der elektrischen Maschine (6) mitgeschleppt wird, so daß beim Beschleunigen des Fahrzeugs aus dem Stand auch der Verbrennungsmotor (1) beschleunigt wird.

## Claims

1. A drive system for a motor vehicle, with an internal combustion engine (1) and an electric machine (6), each of which can be used independently as a drive engine for the vehicle, the drive system having a control which is constructed so that the drive-away phase proceeds as follows:
i) the vehicle is initially accelerated by the electric machine (6) alone,
ii) during this process the internal combustion engine (1) is started,
iii) the internal combustion engine (1) then takes over the driving of the vehicle,
**characterised in that** the internal combustion engine and the electric machine are coupled to each other in such a manner that in step (i) the internal combustion engine (1) is entrained from the start of the drive-away phase by the electric machine (6) so that the internal combustion engine (1) is also accelerated during the acceleration of the vehicle from standstill.

2. A drive system according to Claim 1, in which the electric machine (6) is seated without gearing up on the crankshaft of the internal combustion engine (1) or an extension of the crankshaft.

3. A drive system according to Claim 1 or 2, in which the electric machine (6) is used as a generator when the vehicle is driven by the internal combustion engine (1).

4. A drive system according to one of Claims 1 to 3, in which torque fluctuations which occur while the internal combustion engine (1) is being entrained are actively reduced by opposing torques which are applied by the electric machine (6) and in addition are superimposed on the driving torque.

5. A drive system according to one of Claims 1 to 4, in which the internal combustion engine (1) is also accelerated in a decompressed state at the start of the entrainment process.

6. A drive system according to Claim 5, in which compression starts smoothly after the initial, decompressed entraining process.

7. A drive system according to Claim 5 or 6, in which the internal combustion engine (1) is fitted with an electromagnetic or electrodynamic valve gear and decompression is achieved by suitable control of this valve gear.

8. A drive system according to one of Claims 1 to 7, in which, while the internal combustion engine (1) is being entrained, the fuel supply and/or the ignition, where provided, is delayed at least until a speed sufficient for starting the internal combustion engine (1) is reached.

9. A drive system according to one of Claims 1 to 8, which is fitted with an automatic start-stop control of the internal combustion engine (1).

10. A method for operating a drive system for a motor vehicle in accordance with Claim 1, having the following steps:
i) the vehicle is initially accelerated by the electric machine (6) alone,
(ii) during this process the internal combustion engine is started,
iii) the internal combustion engine (1) then takes over the driving of the vehicle,
**characterised in that** in step i) the internal combustion engine (1) is entrained from the start of the drive-away phase by the electric machine (6) so that the internal combustion engine (1) is also accelerated during the acceleration of the vehicle from a standstill.

## Revendications

1. Système d'entraînement pour un véhicule automobile, comportant un moteur à combustion interne (1) et une machine électrique (6), qui peuvent être utilisés respectivement en soi comme moteur d'entraînement du véhicule, le système d'entraînement possédant une unité de commande agencée de telle sorte que la phase de démarrage du véhicule se déroule comme suit:
i) le véhicule est initialement accéléré uniquement au moyen de la machine électrique (6),
ii) le moteur à combustion interne (1) est mis en marche entre-temps,
iii) le moteur à combustion interne (1) assume ensuite l'entraînement du véhicule,
**caractérisé en ce que** le moteur à combustion interne et la machine électrique sont couplés l'un à l'autre de telle sorte que lors de l'étape i) le moteur à combustion interne (1) est entraîné conjointement, depuis le début de la phase de démarrage, par la machine électrique (6) de sorte que lors de l'accélération du véhicule, à partir de l'état d'arrêt, le moteur à combustion interne (1) est également accéléré.

2. Système d'entraînement selon la revendication 1, dans lequel la machine électrique (6) est montée sans transmission sur le vilebrequin du moteur à combustion interne (1) ou sur un prolongement du vilebrequin.

3. Système d'entraînement selon la revendication 1 ou 2, dans lequel la machine électrique (6) est utilisée en tant que générateur, lorsque le véhicule est entraîné par le moteur à combustion interne (1).

4. Système d'entraînement selon l'une des revendications 1 à 3, selon lequel des variations du couple, qui apparaissent lors de l'entraînement accouplé du moteur à combustion interne (1), sont réduites de façon actives par des couples dirigés en sens opposé, qui sont appliqués par la machine électrique (6) et sont superposés au couple d'entraînement.

5. Système d'entraînement selon l'une des revendications 1 à 4, dans lequel le moteur à combustion interne (1) est accéléré conjointement à l'état décompressé au début de l'entraînement accouplé.

6. Système d'entraînement selon la revendication 5, dans lequel la compression s'établit doucement après l'entraînement accouplé initial dans l'état décompressé.

7. Système d'entraînement selon la revendication 5 ou 6, dans lequel le moteur à combustion interne (1) est équipé d'un dispositif d'entraînement électromagnétique ou électrodynamique des soupapes et la décompression est obtenue au moyen d'une commande appropriée de ce dispositif d'entraînement des soupapes.

8. Système d'entraînement selon l'une des revendications 1 à 7, dans lequel lors de l'entraînement accouplé du moteur à combustion interne (1), l'envoi de carburant et/ou l'allumage éventuellement présent sont retardés au moins jusqu'à ce que soit atteinte une vitesse de rotation suffisante pour faire démarrer le moteur à combustion interne (1).

9. Système d'entraînement selon l'une des revendications 1 à 8, qui est équipé d'une unité de commande marche-arrêt automatique du moteur à combustion interne (1).

10. Procédé pour faire fonctionner un système d'entraînement pour un véhicule automobile selon la revendication 1, comprenant les étapes suivantes:
i) le véhicule est initialement accéléré uniquement au moyen de la machine électrique (6),
ii) le moteur à combustion interne (1) est mis en marche entre-temps,
iii) le moteur à combustion interne (1) assume ensuite l'entraînement du véhicule,
**caractérisé en ce que** lors de l'étape i) le moteur à combustion interne (1) est entraîné selon un entraînement accouplé, dès le début de la phase de démarrage, par la machine électrique (6) de sorte que lors de l'accélération du véhicule, à partir de l'état d'arrêt, le moteur à combustion interne (1) est également accéléré.
